# FASCICULE DE BREVET EUROPEEN

(11) **EP 0 475 792 B1**
(45) Date de publication et mention de la délivrance du brevet: **15.02.1995**
(21) Numéro de dépôt: 91402103.5
(22) Date de dépôt: 26.07.1991
(51) Int. Cl.: F16C 33/60, F16C 19/38

(54) **Procédé pour réaliser une collerette de roulement et ensemble de roulement équipé d'une telle collerette**
Verfahren zur Herstellung eines Wälzlagerflansches und Wälzlager mit einem solchen Flansch
Process for making a collar of a roller bearing, and roller bearing equipped with such a collar

(30) Priorité: 04.09.1990 FR 9010961
(43) Date de publication de la demande: 18.03.1992
(73) Titulaire: S.N.R. ROULEMENTS, 74010 Annecy Cédex (FR)
(72) Inventeur: Valette, Michel, F-74600 Quintal (FR); Jayr, André, F-74000 Annecy (FR)
(74) Mandataire: Ernst-Schonberg, Michel

(56) Documents cités:
- DE-A- 3 418 440
- DE-A- 3 940 395
- FR-A- 2 605 557
- GB-A- 2 191 268

## Description

L'invention concerne un ensemble de roulement porteur d'une collerette de rétention axiale d'une bague intérieure d'un roulement à deux rangées de corps roulants conforme au préambule de la revendication.

La publication FR-A-2605557 décrit un ensemble de roulement porteur d'une collerette façonnée par un outil de pressage ou de forgeage animé d'un mouvement oscillant autour de l'axe du roulement de manière à évaser radialement l'extrémité tubulaire d'un moyeu ou d'une bague en cours de rotation. Lorsque le roulement est soumis à des charges axiales, les efforts de poussée exercés directement ou indirectement sur la collerette engendrent des efforts susceptibles d'occasionner la rupture de la collerette et l'éjection axiale de la bague intérieure.

On a également constaté que les efforts de pressage et de forgeage engendrés au cours du processus de réalisation de la collerette génèrent des déformations de la bague du roulement.

L'invention a pour objet un ensemble de roulement avec une collerette du type prédéfini formée à l'extrémité axiale d'une bague de roulement ou d'un moyeu, par pressage ou forgeage en localisant une zone de pliage de dimension appropriée adjacente à une zone traitée thermiquement dans le sens d'une augmentation locale de la dureté de la pièce porteuse de la collerette.

L'invention a également pour objet un procédé pour réaliser une collerette par exemple au contact d'un organe de mise en tension axiale de la bague du roulement dans le but de réaliser une précharge de l'ensemble de roulement.
L'ensemble de roulement prédéfini et les procédés de réalisation de la collerette sont réalisés conformément aux revendications 1 et 4 à 6.

L'invention trouve plus particulièrement une application sur les ensembles de roulement qui possèdent au moins une bride de fixation.

Selon une caractéristique de l'invention la face interne de la collerette se prolonge axialement sous l'élément de bague intérieure par une bordure d'appui axial réalisée au cours du processus de façonnage de la collerette.

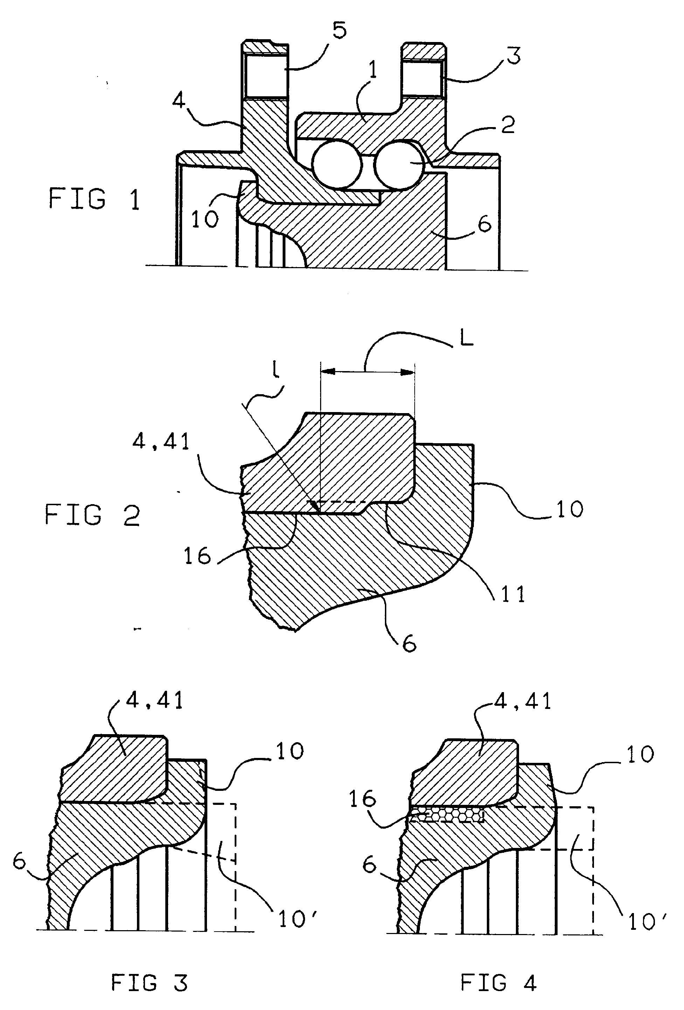

D'autres caractéristiques et avantages de l'invention apparaîtront à la lecture de la description d'exemples de réalisation de celle-ci en référence au dessin annexe dans lequel la figure 1 représente en demi-coupe axiale un exemple de réalisation de l'ensemble de roulement à deux brides de fixation.

La figure 2 est représentation à une plus grande échelle de la collerette de rétention d'un élément de bague.

Les figures 3 et 4 sont des représentations de détail de la collerette montrant sa forme d'ébauche suivant deux variantes de réalisation.

La figure 5 représente en demi-coupe axiale une forme de réalisation de l'ensemble de roulement dans lequel la collerette est située sur la bague intérieure.

La figure 6 représente en demi-coupe axiale une forme de réalisation de l'ensemble de roulement dans lequel la collerette est située sur un support de la bague intérieure.

La figure 7 est une représentation de détail de la collerette au contact d'un anneau de mise en précharge du roulement.

Dans l'ensemble de roulement représente à la figure 1, la bague extérieure 1 du roulement à deux rangées de corps roulants 2 possède une bride de fixation 3 et deux pistes de roulements intérieures.

Un élément de bague intérieure 4 possède également une bride de fixation 5 et est montée sur un autre élément de bague intérieure 6. L'extrémité axiale de l'élément de bague intérieure 6 possède une collerette 10 réalisée à partir d'une ébauche 10′ dont les sections primitives représentées en traits mixtes sur les figures 3 et 4, permettent la réalisation sur la collerette d'une zone fonctionnelle d'appui d'une partie de joint de transmission.

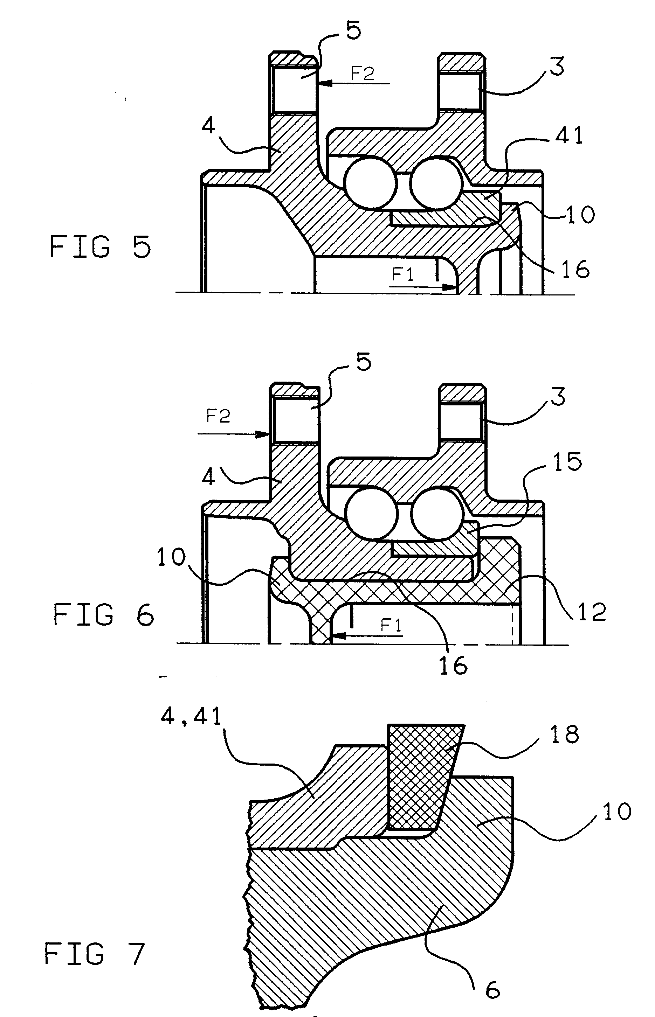

La figure 2 se rapporte au moyen de retenue axiale d'un élément de bague intérieure tel que 4 représente à la figure 1 ou 6 ou d'un élément de bague intérieure rapporte tel que 41 représenté à la figure 5. A cet effet la face interne de la collerette 10 se prolonge axialement sous l'élément de bague 4 ou 41 qui possède une partie alésée avec une extrémité latérale de diamètre interne augmentée dans le but de favoriser l'imbrication de la matière constitutive de la collerette 10 au contact de l'élément de la bague 4 ou 41 au cours de la mise en oeuvre du procédé de façonnage de la collerette et la constitution sur l'élément de bague 6 d'une bordure axiale d'appui 11.

Dans le but d'éviter la déformation de l'élément 4 de la bague intérieure au cours du façonnage de la collerette 10, la collerette 10 et notamment sa zone d'appui sont situées sensiblement dans le plan radial de la bride de fixation 5 qui prolonge radialement l'élément 4 de la bague intérieure.

Les dispositions constructives précitées concernent la figure 6 selon laquelle la collerette 10 est portée par une douille d'assemblage 12 en appui sur un élément de bague 15 rapporté sur l'élément 4 dans le but de dissocier les deux pistes de roulement des rangées de corps roulants.

Pour faciliter la confection de la collerette 10 il est prévu de localiser la zone de déformation sur l'extrémité de l'élément de bague 6 (fig. 1), de l'élément de bague 4 (fig. 5) ou sur la douille 12 (fig. 6). Dans ce but, l'extrémité correspondante des éléments 6, 4 ou 12 est dimensionnée en conséquence dans son épaisseur comme montre aux figures 3 et 4. Il est également possible de faciliter le façonnage de la collerette telle que 10 en faisant subir par exemple à l'élément de bague intérieure 6 un traitement thermique approprié de durcissement dans une zone de portée 16 qui supporte l'autre élément 4, 41 de la bague intérieure et qui prolonge axialement la bordure d'appui axial de la collerette 10.

Pour faciliter le sertissage l'élément de bague 4, 41 par le façonnage de la collerette on s'efforce de localiser le pliage de l'extrémité correspondante de l'élément de bague 4 ou de la douille 12 par une définition dimensionnelle appropriée de la section utile de la bague 4 ou de la douille 12.

Au cours du processus de façonnage de la collerette 10, il est prévu selon une caractéristique de l'invention de maintenir une certaine contrainte axiale sur le roulement par la collerette 10. Dans cette hypothèse la collerette 10 est portée par un élément non tournant et localisée hors de la ligne de contact des corps roulants et à une distance L de la portée 16 sous charge (fig. 2).

Selon un premier procédé de réalisation de la collerette sur l'ensemble de roulement préalablement mis sous tension axiale, on procédé à l'allongement élastique de l'élément de bague 4 (fig. 5) ou de la douille 12 (fig. 6) par application d'efforts F1, F2 antagonistes qui mettent en tension élastique l'élément de roulement avant l'application de l'outil de façonnage de la collerette.

Selon un autre procédé et préalablement au façonnage de la collerette, on procédé à l'allongement de l'élément 4 ou 12 porteur de la collerette en procédant à son chauffage entre 200 à 300°.

Selon une autre variante de réalisation du procédé, on utilise un anneau 18 d'appui de section appropriée sur l'élément de bague 4 ou 41 qui est accole à la collerette 10. L'anneau 18 est chauffé à une température comprise entre 200 et 300° C et monté sur l'élément de roulement 4 ou 12 avant façonnage de la collerette. Le chauffage de l'anneau 18 peut être réalisé pendant le façonnage de la collerette. Au cours du refroidissement de l'anneau son diamètre diminue. Le rétreint de l'anneau crée une charge axiale sur le roulement dont l'importance peut être ajustée par suite du contrôle de la dilatation de l'anneau.

## Revendications

1. Ensemble de roulement dans lequel une collerette radiale (10) porte une face interne de rétention d'un élément de bague (4, 41) intérieure d'un roulement à deux rangées de corps roulants (2) et possède au moins une bride de fixation (5), et dans lequel la face interne de la collerette (10) se prolonge axialement sous l'élément de bague (4 ou 41) par une bordure d'appui axial (11), caractérisé par le fait que la bordure d'appui axiale de la collerette (10) se prolonge axialement par une portée (16) superficiellement durcie qui supporte l'élément (4, 41) de la bague intérieure.

2. Ensemble de roulement selon la revendication 1, caractérisé par le fait que la bride de fixation (5) prolonge radialement l'élément de la bague (4) retenue par la collerette (10) et se trouve sensiblement dans le plan radial de ladite collerette.

3. Ensemble de roulement selon l'une quelconque des revendications 1 et 2, caractérisé par le fait que la collerette (10) est accolée à un anneau (18) d'appui axial sur l'élément de bague.

4. Procédé de réalisation de la collerette de l'ensemble de roulement selon l'une quelconque des revendications 1 à 3, caractérisé par la réalisation d'une phase de chauffage de 200 à 300° C de l'élément porteur de la collerette (10) avant l'application d'un outil de façonnage de la collerette.

5. Procédé de réalisation de la collerette de l'ensemble de roulement selon l'une quelconque des revendications 1 à 3, caractérisé par la mise en tension élastique de l'élément porteur de la collerette avant l'application d'un outil de façonnage.

6. Procédé de réalisation de la collerette de l'ensemble de roulement selon la revendication 3 , caractérisé par le fait que l'on monte l'anneau à l'état chaud sur l'élément de roulement avant façonnage de la collerette.

## Patentansprüche

1. Wälzlager, mit einem Radialflansch (10), welcher eine innere Haltefläche für ein inneres Ringteil (4, 41) eines Wälzlagers mit zwei Reihen Wälzkörpern trägt und das wenigstens einen Befestigungsflansch (5) aufweist, wobei die Innenfläche des Flansches (10) axial unter das Ringteil (4 oder 41) durch einen radialen Stützrand (11) verlängert ist, dadurch gekennzeichnet, daß der axiale Stützrand (10) radial durch eine Auflage (16) mit gehärteter Oberfläche verlängert ist, welche das innere Ringteil (4, 41) trägt.

2. Wälzlager nach Anspruch 1, dadurch gekennzeichnet, daß der Befestigungsflansch (5) das durch den Flansch (10) gehaltene Ringteil (4) radial verlängert und im wesentlichen in der radialen Ebene des Flansches angeordnet ist.

3. Wälzlager nach einem der Ansprüche 1 und 2, dadurch gekennzeichnet, daß der Flansch (10) mit einem Ring (18) verbunden ist zur axialen Abstützung am Ringteil.

4. Verfahren zur Herstellung des Flansches des Wälzlagers gemäß einem der Ansprüche 1 bis 3, gekennzeichnet durch den Verfahrensschritt einer Erhitzung auf 200 bis 300°C des Tragteils für den Flansch (10) vor dem Einsatz eines Herstellungswerkzeugs für den Flansch.

5. Verfahren zur Herstellung des Flansches des Wälzlagers gemäß einem der Ansprüche 1 bis 3, gekennzeichnet durch das Anlegen einer elastischen Kraft an das Tragteil des Flansches vor dem Einsatz des Bearbeitungswerkzeugs.

6. Verfahren zur Herstellung des Flansches des Wälzlagers gemäß Anspruch 3, dadurch gekennzeichnet, daß der Ring im heißen Zustand mit dem Wälzlager verbunden wird vor der Bearbeitung des Flansches.

## Claims

1. A roller bearing assembly in which a radial collar (10) bears an inner retaining surface for an inner ring member (4, 41) of a roller bearing with two rows of rolling bodies (2) and comprises at least one fastening flange (5), and in which the inner surface of the collar (10) is axially prolonged below the ring member (4 or 41) by an axial support edge (11), characterised in that the axial support edge of the collar (10) is axially prolonged by a surface-hardened bearing (16) which bears the member (4, 41) of the inner ring.

2. A roller bearing assembly as claimed in claim 1, characterised in that the fastening flange (5) radially prolongs the ring member (4) retained by the collar (10) and is disposed substantially in the radial plane of this collar.

3. A roller bearing assembly as claimed in any of claims 1 and 2, characterised in that the collar (10) is coupled with a ring (18) for axial support on the ring member.

4. A method of production of the collar of the roller bearing assembly as claimed in any one of claims 1 to 3, characterised by the conduct of a stage of heating to 200 to 300°C of the member bearing the collar (10) before a collar shaping tool is applied.

5. A method of production of the collar of the roller bearing assembly as claimed in any one of claims 1 to 3, characterised in that the member bearing the collar is elastically tensioned before a shaping tool is applied.

6. A method of production of the collar of the roller bearing assembly as claimed in claim 3, characterised in that the ring is mounted in the hot state on the roller bearing member before shaping of the collar.
